# EUROPÄISCHE PATENTSCHRIFT

(11) **EP 2 926 941 B1**
(45) Veröffentlichungstag und Bekanntmachung des Hinweises auf die Patenterteilung: **28.12.2016**
(21) Anmeldenummer: 14163458.4
(22) Anmeldetag: 03.04.2014
(51) Int. Cl.: B23K 37/04, B23K 26/08, B23Q 11/00

(54) **Strahlbearbeitungsvorrichtung**
Jet or beam processing device
Dispositif d'usinage par rayonnement ou jet de fluide

(43) Veröffentlichungstag der Anmeldung: 07.10.2015
(73) Patentinhaber: Bystronic Laser AG, 3362 Niederönz (CH)
(72) Erfinder: Bossoni, Sergio, 8048 Zürich (CH); Steinlin, Markus, 8032 Zürich (CH)
(74) Vertreter: Patentbüro Paul Rosenich AG

(56) Entgegenhaltungen:
- WO-A1-2005/035185
- WO-A1-2006/035307
- DE-U1-202005 014 428

## Beschreibung

Die Erfindung betrifft eine Strahlbearbeitungsvorrichtung zur Bearbeitung eines Werkstückes, insbesondere eine Laserstrahl- oder Fluidstrahl-Bearbeitungsvorrichtung, umfassend ein Gestell, eine Werkstückauflage, die vom Gestell gehalten wird, und ein Strahlwerkzeug, das vom Gestell getragen wird und relativ zur Werkstückauflage verfahrbar ist.

Bei Lasermaschinen wird das Werkstück üblicherweise nicht festgehalten wie bei vielen anderen Werkzeugmaschinen, sondern liegt lose auf der Werkstückauflage, z.B. Schneidrost. Die hochdynamische Bewegung grösserer Massen (z.B. einer Schneidbrücke mit ∼500kg) führt zu einer Anregung des Maschinenrahmens, welcher wiederum via Schneidtisch das Blech auf dem Schneidrost anregt. Die nicht erwünschte Bewegung des Blechs führt zur Reduktion der Konturgenauigkeit und zu dem Phänomen des Wellenschnitts. Um diese negativen Auswirkungen auf die Schnittqualität zumindest teilweise zu verringern, muss die Maschinendynamik und somit die Produktivität begrenzt werden. Die erhöhte Bearbeitungszeit stellt einen erheblichen Nachteil solcher Bearbeitungsvorrichtungen dar.

Zur Reduktion der Werkstückanregung kann das Werkstück an der Werkstückauflage fixiert bzw. eingespannt werden. Die DE102012102820A1 offenbart eine Spannvorrichtung zum Spannen von Blechbauteilen. Dadurch werden die Blechbauteile während der Bearbeitung fixiert. Die EP2465637A1 offenbart eine Werkstück-Halteeinrichtung zum Festlegen eines plattenartigen Werkstückes an einer Werkstück-Bewegungseinheit einer Werkzeugmaschine mit zumindest zwei Werkstückspannelementen.

Die DE202005014428U offenbart eine Wasserstrahlschneidmaschine, bzw. eine Laserbearbeitungsmaschine, wobei das Werkzeug an einem Portal verfahrbar angebracht ist, welches die Bearbeitungsfläche überspannt. Der Portalträger besteht aus einem Granitbalken, an welchem die Lauffläche angebracht ist, und zeigt somit ein verbessertes Dämpfungsverhalten zur Aufnahme von Schwingungen, die durch schnelle Positionierungsbewegungen des Werkzeugs entstehen können.

Solche Lösungen erlauben zwar eine höhere Werkzeugdynamik, haben aber folgende entscheidenden Nachteile:
- erfordern zusätzliche Maschinenkomponenten, z.B. eine Werkstückklemmung mittels eigens dafür vorzusehenden Aktuatoren oder verstellbare Klemmelemente am Tisch,
- weisen eine erschwerte Werkstückautomation auf,
- die Wirkung nimmt während einer Bearbeitung mit fortschreitendem Verschnitt ab,
- das Werkstück (z.B. Blech) wird gegen Ende nur mehr am Verschnitt gehalten,
- Verminderte Werkstückausnutzung durch vorgegebene Klemmzonen,
- Verringerte Produktivität, da die Klemmung am Ende gelöst werden muss.

Da die Anregung des Werkstückes über das Gestell bzw. den Maschinenrahmen erfolgt, bietet sich auch das steife Anbinden des Maschinenrahmens an den Boden als alternative Lösung an. Das steife Anbinden von schweren Maschinenrahmen ist jedoch technisch sehr aufwändig und stellt auch zusätzliche Anforderungen an den Boden. Dabei kann sich die Anregung des Bodens negativ auf umgebende Prozesse auswirken. Ausserdem wird die gesamte Bearbeitungsvorrichtung empfindlicher auf Anregungen aus der Umgebung.

Die DE10335043B3 offenbart eine Werkzeug- oder Produktionsmaschine mit einer Einrichtung zum Bedämpfen von mechanischen Schwingungen. Dabei werden Piezoaktoren in den Aufstellelementen von Werkzeugmaschinen verwendet.

Die US2008257667A1 offenbart eine Art Schwingungsentkopplung zwischen einem Maschinenwerkzeug und Aufbauelementen, wie einem Versorgungskabel, einer hydraulischen Komponente und einem Ventil, die auf einer Platte angeordnet sind.

Die US2012217229A1 offenbart eine Werkstückauflage mit einer Vielzahl an Rostelementen, auf die Stützelemente in einer für die Bearbeitung erforderlichen Anordnung aufgesteckt werden können, zum Halten von Werkstücken während der Bearbeitung und zum Auffangen von Restteilen.

Die EP2626165A1 offenbart die Absenkbarkeit von Rostelementen mittels einer auslenkbaren Kette. Die durch Bewegungen des Strahlwerkzeuges erzeugten Schwingungen werden, insbesondere in einer Richtung parallel zur Auflagefläche der Werkstückauflage, ungehindert auf das Werkstück übertragen.

Die Aufgabe der vorliegenden Erfindung besteht darin, die Nachteile aus dem Stand der Technik zu beseitigen und eine Strahlbearbeitungsvorrichtung bereitzustellen, die sich durch eine hohe Bearbeitungs-, insbesondere Schneidqualität bei gleichzeitig hoher Maschinendynamik auszeichnet. Dabei soll vor allem die Konturgenauigkeit der Bearbeitung erhöht und das Phänomen des Wellenschnittes reduziert werden. Die Bearbeitungszeiten sollen dabei möglichst kurz sein, wobei die Dynamik des Strahlwerkzeuges (Geschwindigkeiten, Beschleunigungen, etc.) hoch sein soll. Die erfindungsgemässe Lösung soll in ihrer Konstruktion einfach und kostengünstig herstellbar sein und in einer Ausführungsform auch auf bestehenden Anlagen nachrüstbar sein.

Diese Aufgabe wird mit einer eingangs erwähnten Strahlbearbeitungsvorrichtung, dadurch gelöst, dass in einem schwingungsübertragenden Verbindungspfad zwischen dem Strahlwerkzeug und der durch die Werkstückauflage definierten Auflagefläche für das Werkstück zumindest ein Dämpfungselement, vorzugsweise mehrere parallel geschaltete und bevorzugt in Abständen voneinander angeordnete Dämpfungselemente, eingebaut ist/sind. Das Dämpfungselement kann dabei z.B. zwischen den Antriebsachsen des Strahlwerkzeuges und dem Gestell oder zwischen Gestell und Werkstückauflage angeordnet sein. Ebenso kann das Dämpfungselement in den einzelnen Bauteilen, z.B. im Gestell und/oder in der Werkstückauflage integriert angeordnet sein. Jedenfalls ist es zur Schwingungsentkopplung zwischen dem Strahlwerkzeug oder der Lagerung des Strahlwerkzeuges oder dem Gestell und der Auflagefläche der Werkstückauflage eingerichtet.

In einer möglichen Ausführungsform ist das Dämpfungselement in einem schwingungsübertragenden Verbindungspfad zwischen dem Strahlwerkzeug und der Werkstückauflage eingebaut. Auf diese Weise kann die Erfindungsidee verwirklicht werden, ohne die Werkstückauflage als solche verändern zu müssen, sodass auf bestehende Werkstückauflagen zurückgegriffen werden kann.

Unter einem schwingungsübertragenden Verbindungspfad ist eine Übertragungsstrecke innerhalb der Strahlbearbeitungsvorrichtung zu verstehen, über die mechanische Schwingungen, die durch die Dynamik des Strahlwerkzeuges verursacht werden, auf die Werkstückauflage bzw. deren Auflagefläche (und folglich auf das zu bearbeitende Werkstück) übertragen werden. Der Verbindungspfad kann Teile des Gestells, Tragteile, Gerüstteile, die Werkstückauflage, Antriebsachsen, ein Brücke und/oder Halterungen sowie die Verbindungen zwischen einzelnen Bauteilen und zu dem Strahlwerkzeug und/oder zu der Werkstückauflage umfassen bzw. sich entlang dieser Bauteile erstrecken.

Unter dem Ausdruck "parallel geschaltet" wird nicht die räumliche Anordnung verstanden, sondern die funktionelle Anordnung bzw. Schaltung der Dämpfungselemente.

Dies erlaubt eine hohe Dynamik des Strahlwerkzeuges, ohne dass dadurch das Werkstück relativ zur Werkstückaufnahme in einer für den Bearbeitungsprozess ungünstigen Weise angeregt wird.

In einer bevorzugten Ausführung steht eine Dämpfungsrichtung der durch das zumindest eine Dämpfungselement vermittelten Dämpfung - vorzugsweise die Hauptdämpfungsrichtung, d.h. die Richtung mit der grössten Dämpfungswirkung - im Wesentlichen parallel zur Auflagefläche der Werkstückauflage. Dadurch können Auslenkungen des Werkstückes entlang (d.h. parallel) der Auflagefläche zuverlässig vermieden bzw. reduziert werden. Das Dämpfungselement ist dabei derart ausgebildet bzw. derart in die Strahlbearbeitungseinrichtung eingebaut, dass eine Dämpfung in zumindest einer Richtung (vorzugsweise in mehreren Richtungen) parallel zur Auflagefläche erfolgt. D.h. das eingebaute Dämpfungselement ist dazu eingerichtet, eine Dämpfungswirkung zu erzielen, die eine Dämpfungsrichtung definiert bzw. umfasst, die parallel zur Auflagefläche steht. Die durch das zumindest eine Dämpfungselement bewirkte Dämpfung kann selbstverständlich mehrere Richtungskomponenten aufweisen; unter dem Ausdruck "eine Dämpfungsrichtung der durch das zumindest eine Dämpfungselement vermittelten Dämpfung" ist daher zu verstehen, dass zumindest eine Richtungskomponente der Dämpfung parallel zur Auflagefläche ausgerichtet ist.

In einer bevorzugten Ausführung ist/sind das/die Dämpfungselement(e) in der Werkstückauflage selbst integriert.

In einer Ausführungsform umfasst die Werkstückauflage einen Rahmen und Rostelemente, die an dem Rahmen gelagert sind und die Auflagefläche definieren. Das bzw. die Dämpfungselemente (z.B. Feder-Dämpferelemente, Schwingungsisolationsplatten, Zylinder, etc.) können hier zwischen den einzelnen Rostelementen (z.B. Rostlatten) und dem Rahmen eingebaut sein, sodass die Dämpfung zwischen dem Rahmen der Werkstückauflage und den Rostelementen wirkt.

Alternativ können die Dämpfungselemente zumindest einen Teil der Auflagefläche der Werkstückauflage bilden. In diesem Fall liegt das Werkstück direkt auf den Dämpfungselementen auf, die in diesem Fall vorzugsweise als (im Wesentlichen horizontal liegende) Dämpfungsplatten (Schwingungsisolationsplatten) ausgeführt sein können.

Den Ausführungsformen ist gemein, dass das zumindest eine Dämpfungselement innerhalb der Strahlbearbeitungsvorrichtung derart angeordnet und/oder eingerichtet ist, dass eine zumindest teilweise Entkopplung eines zu bearbeitenden Werkstückes, das von der Werkstückauflage getragenen wird, von den durch die Bewegungen des Strahlwerkzeuges relativ zur Werkstückauflage verursachten Schwingungen erreicht wird.

In einer besonders bevorzugten Ausführungsform der Erfindung umfasst die Anbindung der Werkstückauflage an das Gestell zumindest ein Dämpfungselement, vorzugsweise mehrere in Abständen voneinander angeordnete Dämpfungselemente. Das/die Dämpfungselemente ist/sind zwischen dem Gestell und der Werkstückauflage eingebaut. Die Anbindung zwischen Werkstückauflage und Gestell ist vorzugsweise lösbar, z.B. um die Werkstückauflage zum Beschicken mit Werkstücken zu verschieben bzw. herauszufahren.

Durch das Dämpfungselement kann eine Schwingungsentkopplung zwischen Werkstückauflage und Gestell insbesondere bei jenen Frequenzen erreicht werden, die durch die Dynamik des Strahlwerkzeuges und der mit dem Strahlwerkzeug mitbewegten Massen, z.B. Halterungen, Brücken, Träger und dgl., beim Verfahren relativ zur Werkstückauflage hervorgerufen werden. Die Erfindung verfolgt damit einen gänzlich neuen Ansatz, indem erkannt wurde, dass die Bearbeitungsqualität, insbesondere die Konturgenauigkeit, auch dann erhöht werden kann, wenn das Werkstück während der Bearbeitung nicht geklemmt wird. Gleichzeitig werden eine hohe Dynamik des Strahlwerkzeuges und damit kurze Bearbeitungszeiten ermöglicht.

Die erfindungsgemässe Anbindung der Werkstückauflage an das Gestell weist hervorragende Eigenschaften zur Minimierung der Anregungen von auf der Werkstückauflage liegenden Werkstücken.

Die Dämpfung wirkt dabei bevorzugt parallel zur Auflagefläche der Werkstückauflage. Besonders bevorzugt ist die Dämpfungswirkung des/der Dämpfungselements(e) in einer Richtung parallel zur Auflagefläche am grössten.

Strahlwerkzeuge berühren bei der Bearbeitung das Werkstück in der Regel nicht (sondern nur der Strahl, z.B. Laser- oder Fluidstrahl), sodass wegen des berührungslosen Prinzips kein direkter bzw. unmittelbarer Bezug zum Werkstück besteht (im Gegensatz zu einer Kreissäge oder dgl.). Relativbewegungen sind daher grundsätzlich nicht ausgeschlossen. Genau hier setzt die vorliegende Erfindung an.

Um die Auswirkungen einer hohen Werkzeugdynamik auf das Werkstück zu minimieren, handelt es sich bei dem Dämpfungselement vorzugsweise um ein Tiefpasselement, das höhere Frequenzen stärker dämpft als niedrige. Das Tiefpasselement ermöglicht es, die Dynamik der Maschine voll auszuschöpfen. Ausserdem verhindert das Tiefpasselement eine Werkstückanregung über die Umgebung (z.B. über benachbart aufgebaute Anlagen). Da die Strahlbearbeitungsvorrichtung weniger stark von der Umgebung abhängig ist, sind keine Spezialmassnahmen im Boden bzw. Fundament nötig.

Unter dem Begriff Resonanzfrequenz wird im Folgenden das erste (d.h. in Bezug auf die Frequenz unterste) ausgeprägte Maximum der Resonanzkurve verstanden. Die Resonanzkurve ergibt sich dabei als Auslenkung/Antwort in einer bestimmten Raumrichtung auf eine Anregung in dieselbe Raumrichtung.

Eine bevorzugte Ausführungsform zeichnet sich dadurch aus, dass die Anbindung der Werkstückauflage an das Gestell in ihrer Gesamtheit (umfassend die Dämpfungselemente sowie gegebenenfalls Rollen, über die die Werkstückauflage am Gestell aufliegt) derart ausgebildet ist, dass die Resonanzfrequenz der Werkstückauflage relativ zum Gestell in zumindest einer Richtung parallel zur Auflagefläche kleiner ist als in Richtung senkrecht zur Auflagefläche. Dadurch wird insbesondere der unerwünschten Anregung des Werkstückes parallel zur Auflagefläche Rechnung getragen.

Vorzugsweise weist die Resonanzfrequenz der Werkstückauflage in Bezug auf das Gestell einen Wert von höchstens 10Hz, vorzugsweise von höchstens 8Hz auf.

In einer besonders bevorzugten Ausführungsform liegt die Resonanzfrequenz der Werkstückauflage in Bezug auf das Gestell zumindest um einen Faktor 1,5 - vorzugsweise um einen Faktor 2 - unterhalb der Resonanzfrequenz des Werkstückes in Bezug auf die Werkstückauflage.

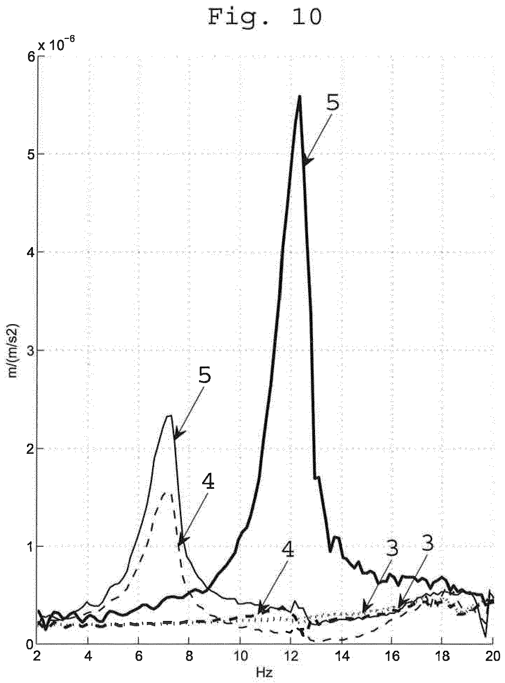

In dem oben angegebenen Verhältnis wird tatsächlich die Resonanzfrequenz des Werkstückes in Bezug auf die Werkstückauflage herangezogen. Im Gegensatz dazu zeigt Fig. 10 die Übertragung eines Beschleunigungssprunges z.B. auf das Werkstück. Dabei wird in der dort dargestellten ,Werkstück-Kurve' auch die Bewegung der Werkstückauflage mit-dargestellt (Superposition der Werkstückauflagenbewegung mit der Relativbewegung Werkstück-Werkstückauflage). Mit "Werkstück in Bezug auf die Werkstückauflage" ist aber in oben angegebener bevorzugter Ausführungsform die Relation/Relativbewegung zwischen Werkstück und Werkstückauflage zu verstehen. Diese Resonanzfrequenz ist somit über das Eingangsspektrum der Werkstückauflage normiert.

Auch wird eine passive Dämpfung aufgrund des einfacheren und kostengünstigen Aufbaus gegenüber einer aktiven Dämpfung bevorzugt. Jedoch wäre auch letztere denkbar, z.B. mittels gesteuerter Piezoelemente.

Unter Gestell wird in vorliegender Anmeldung jede Konstruktion verstanden, die dazu eingerichtet ist, die Werkstückauflage zu halten und das Strahlwerkzeug direkt oder indirekt zu tragen. Das Strahlwerkzeug kann ein Laserbearbeitungskopf oder Fluidbearbeitungskopf jeweils mit einer Austrittsdüse sein und kann mit dem Gestell direkt oder indirekt, z.B. über eine zusätzliche Halterung, eine verfahrbare Brücke, einen Träger und dgl. verbunden sein. Das Gestell kann somit ein (Maschinen)Rahmen, eine Basis, ein Sockel, ein Gerüst und dgl. sein.

Die Werkstückauflage definiert eine Auflagefläche, die bevorzugt im Wesentlichen waagrecht ist, und dient insbesondere zum Tragen bzw. Unterstützen von flächigen Werkstücken, insbesondere Platten und Blechen. Die Werkstückauflage kann z.B. in Art eines (Schneid)Tisches und/oder eines Rosts ausgebildet sein und/oder kann z.B. aus mehreren nebeneinander angeordneten Rost- oder Unterstützungselementen oder zumindest einem Gitter oder zumindest einer Platte gebildet sein. Die Auflagefläche wird in diesem Fall durch die Rost- oder Unterstützungselemente oder das Gitter oder die Platte definiert; die Auflagefläche muss daher nicht unbedingt durch eine ebene Oberfläche definiert sein.

Im Folgenden wird die Wirkung der Erfindung näher beschrieben. Das Bewegen des Strahlwerkzeuges entlang der Antriebsachsen führt zu einer Anregung des Gestells, welcher wiederum über die Werkstückauflage das Werkstück anregt. Bei bestimmten Frequenzen ergeben sich im Stand der Technik Überhöhungen der Schwingamplitude des Werkstückes relativ zur Werkstückauflage um bis zu einem Faktor 60. Diese unerwünschte Bewegung parallel zur Auflagefläche führt zur Reduktion der Konturgenauigkeit, welche eine maximale Ausnutzung der Maschinendynamik verunmöglicht.

Die Erfindungsidee beeinflusst nun die Übertragungskette, indem die Werkstückauflage gegenüber dem Gestell durch die Integration eines neuartigen Elements gedämpft wird. Dadurch wird die Resonanzfrequenz der Werkstückauflage relativ zum Gestell unterhalb die Resonanzfrequenz des Werkstückes relativ zur Werkstückauflage gelegt. Dadurch wird die Resonanzfrequenz des Werkstückes relativ zur Werkstückauflage weniger stark angeregt und die störende Relativbewegung des Werkstückes relativ zum Gestell minimiert.

Die Idee der Dämpfung kann z.B. in beide Richtungen parallel zur Auflagefläche analog angewendet werden; dabei hilft dieses Mittel am meisten in der Richtung der maximalen Auslenkung/Anregung des Gestells durch die Trägheitskraft bei maximaler Beschleunigung des Strahlwerkzeuges bzw. mit diesem mitbewegter Massen. Die Modifikationen der Platten erlauben die kleinste Steifigkeit in die Richtung der grössten Notwendigkeit zu bringen.

Bevorzugt betrifft diese Ausführungsform die Reduktion der Resonanzfrequenzen in Raumrichtungen, die parallel zur Auflagefläche der Werkzeugauflage stehen. Die Anbindung der Werkzeugauflage und dem Gestell wird dadurch in diesen Richtungen weicher. Senkrecht zur Auflagefläche steht die Werkstückauflage üblicherweise über Rollen auf dem Gestell. Die Anbindung in ihrer Gesamtheit zeichnet sich daher dadurch aus, dass deren Steifigkeit parallel zur Auflagefläche kleiner ist/wird als senkrecht zur Auflagefläche.

Eine bevorzugte Ausführungsform zeichnet sich dadurch aus, dass die Anbindung der Werkstückauflage an das Gestell zumindest eine kraftschlüssige Verbindungseinrichtung umfasst, durch die die Werkstückauflage an dem Gestell fixierbar ist, und dass im fixierten Zustand das/die Dämpfungselement(e) zwischen Werkstückauflage und Gestell eingeklemmt angeordnet ist/sind. Die Schwingungsentkopplung kann dadurch auf elegante Weise erfolgen, da das eingeklemmte Dämpfungselement integraler Bestandteil der Anbindung ist. Die kraftschlüssige Verbindungseinrichtung umfasst vorzugsweise zumindest einen betätigbaren Aktor, z.B. einen Druckzylinder, der dazu eingerichtet ist, gleichzeitig die Fixierung der Werkstückauflage und die Klemmung der Dämpfungselemente zu bewirken.

Eine bevorzugte Ausführungsform zeichnet sich dadurch aus, dass die Anbindung der Werkstückauflage an das Gestell zumindest eine, vorzugsweise lösbare, Klemmeinrichtung umfasst, durch die die Werkstückauflage von gegenüberliegenden Seiten einklemmbar ist, wobei im eingeklemmten Zustand das/die Dämpfungselement(e) jeweils zwischen der Werkstückauflage und der Klemmeinrichtung eingeklemmt ist/sind. Auch hier ist das Dämpfungselement integraler Bestandteil der Anbindung, sodass eine optimale Schwingungsentkopplung bei gleichzeitig zuverlässiger Fixierung der Werkstückauflage erfolgen kann.

Eine bevorzugte Ausführungsform zeichnet sich dadurch aus, dass die Klemmrichtung im Wesentlichen parallel zur Auflagefläche der Werkstückauflage steht. Bei Platten als Dämpfungselementen steht die Klemmrichtung vorzugsweise im Wesentlichen senkrecht zur Plattenebene.

Die kraftschlüssige Verbindungseinrichtung, insbesondere Klemmeinrichtung, kann zumindest einen Aktuator, insbesondere in Form eines Druckzylinders, aufweisen, der die Klemmung des Dämpfungselementes bewirkt. Hier kann ein vorzugsweise plattenförmiges Dämpfungselement zwischen dem Aktuator oder einer vom Aktuator bewegbaren Klemmbacke (z.B. in Form einer Stahlplatte) und der Werkstückauflage geklemmt werden, um die gewünschte Dämpfungseigenschaft zu erhalten.

Dabei kann die Klemmeinrichtung zumindest zwei Aktuatoren umfassen, die gleichermassen von gegenüberliegenden Seiten auf die Werkstückauflage drücken und diese damit einklemmen. Möglich ist jedoch auch, dass nur zumindest ein Aktuator vorgesehen ist, der die Werkstückauflage zwischen sich und einem stationären Gegenanschlag einklemmt.

Die Strahlbearbeitungsvorrichtung kann auch zumindest zwei kraftschlüssige Verbindungseinrichtungen, insbesondere Klemmeinrichtungen aufweisen, die in verschiedenen Bereichen der Werkstückauflage angreifen, z.B. an den beiden Endbereichen der Werkstückauflage.

Vorzugsweise wirken die kraftschlüssige Verbindungs- bzw. Klemmeinrichtung beim Klemmen bzw. Fixieren über die Dämpfungselemente auf den Rahmen der Werkstückauflage.

Eine bevorzugte Ausführungsform zeichnet sich dadurch aus, dass das/die Dämpfungselement(e) in geklemmtem Zustand in einer Richtung, die parallel zur Auflagefläche der Werkstückauflage und senkrecht zur Klemmrichtung steht, eine derart tiefe Steifigkeit aufweisen, dass die Eigenfrequenz der Werkstückauflage relativ zum Gestell jeglicher Eigenformen mit Richtungsanteilen in die gleiche Richtung niedriger ist als die Eigenfrequenz von Eigenformen vom Werkstück relativ zur Werkstückauflage mit Richtungsanteilen in diese Richtung.

Bevorzugt weist/weisen das/die Dämpfungselement(e) in geklemmtem Zustand in einer Richtung parallel zur Klemmrichtung, eine derart tiefe Steifigkeit auf, dass die Resonanzfrequenz der Werkstückauflage relativ zum Gestell in Richtung parallel zur Klemmrichtung niedriger ist als die Eigenfrequenz vom Werkstück relativ zur Werkstückauflage in die gleiche Richtung parallel zur Klemmrichtung.

Eine mögliche Ausführungsform zeichnet sich dadurch aus, dass das/die Dämpfungselement(e) in geklemmtem Zustand in einer (ersten) Richtung, die parallel zur Auflagefläche der Werkstückauflage und senkrecht zur Klemmrichtung steht, eine kleinere Steifigkeit aufweisen als in einer (zweiten) Richtung senkrecht zur Auflagefläche. Bei einer im Wesentlichen waagrecht ausgerichteten Auflagefläche sorgen die Dämpfungselemente in (erster) Richtung parallel zur Auflagefläche für eine ,weichere' Anbindung als in vertikaler Richtung. Dies ermöglicht die gezielte Verhinderung von Anregungen bzw. Bewegungen des Werkstückes in der Auflageebene.

Eine mögliche Ausführungsform zeichnet sich dadurch aus, dass das/die Dämpfungselement(e) in geklemmtem Zustand in einer (ersten) Richtung, die parallel zur Auflagefläche der Werkstückauflage und senkrecht zur Klemmrichtung steht, eine kleinere Steifigkeit aufweisen als in Klemmrichtung. Dies gewährleistet eine zuverlässige Fixierung der Werkstückauflage, ermöglicht aber in erster Richtung eine ,weichere' Anbindung, wodurch eine richtungsabhängige stärkere Dämpfung in erster Richtung erzielt werden kann. Damit kann der Verfahrbarkeit der Trägerkonstruktion (z.B. Brücke) für das Strahlwerkzeug und seiner Dynamik optimal Rechnung getragen werden.

In zusammengefasster Form ergibt sich somit das/die Dämpfungselement(e) in geklemmtem Zustand in einer Richtung, die parallel zur Auflagefläche der Werkstückauflage und senkrecht zur Klemmrichtung steht, eine kleinere Steifigkeit aufweisen können als in einer zu dieser Richtung orthogonalen Richtung, vorzugsweise in Richtung senkrecht zur Auflagefläche oder in Klemmrichtung.

Das als Tiefpasselement ausgebildete Dämpfungselement kann grundsätzlich in alle Richtungen der Werkstückebene eingesetzt werden.

Eine bevorzugte Ausführungsform zeichnet sich allerdings dadurch aus, dass das Strahlwerkzeug über lineare Antriebsachsen mit dem Gestell verbunden ist und dass das/die Dämpfungselement(e) in eingebautem Zustand in einer Richtung, die parallel zu der Antriebsachse mit dem grössten Trägheitsmoment oder parallel zur Richtung, in der bei maximaler Beschleunigung des Strahlwerkzeuges relativ zum Gestell eine maximale Auslenkung bzw. Anregung des Gestells erfolgt, steht, eine kleinere Steifigkeit aufweisen als in einer Richtung senkrecht dazu. Das Tiefpasselement wird somit vorzugsweise in Richtung der Antriebsachse mit dem grössten Trägheitsmoment eingesetzt.

Eine bevorzugte Ausführungsform zeichnet sich dadurch aus, dass das Strahlwerkzeug auf einer Brücke angeordnet ist, die entlang einer Verfahrrichtung bewegbar ist, und dass in eingebautem Zustand die Steifigkeit des/der Dämpfungselement(e) in einer Richtung, die parallel zur Verfahrrichtung der Brücke oder parallel zur Richtung, in der bei maximaler Beschleunigung der Brücke relativ zum Gestell eine maximale Auslenkung bzw. Anregung des Gestells erfolgt, steht, kleiner ist/sind als in einer Richtung, die senkrecht zur Verfahrrichtung der Brücke und/oder senkrecht zur Richtung, in der bei maximaler Beschleunigung der Brücke relativ zum Gestell eine maximale Auslenkung bzw. Anregung des Gestells erfolgt, steht.

Eine bevorzugte Ausführungsform zeichnet sich dadurch aus, dass das/die Dämpfungselement(e) plattenförmig ausgebildet sind und quer, vorzugsweise im Wesentlichen senkrecht zur Auflagefläche der Werkstückauflage stehen. Dies ermöglicht eine besonders einfache, kostengünstige und platzsparende Lösung, die zudem in bestehenden Anlagen nachgerüstet werden kann. Bevorzugt wird, wenn das als Tiefpasselement ausgebildete Dämpfungselement als Schwingungsisolationsplatte ausgebildet ist. Weiters wird bevorzugt, wenn die plattenförmigen Dämpfungselemente in Scherrichtung eingesetzt werden (d.h. die Dämpfungsrichtung parallel zu der von der Platte definierten Ebene steht). Ein plattenförmiges Dämpfungselement kann zudem einfach (z.B. vom Kunden selbst) montiert werden.

Die plattenförmigen Dämpfungselemente können eine homogene Materialverteilung aufweisen, können aber auch in Art eines Sandwichelementes aus mehreren miteinander verbundenen Schichten gebildet sein.

Eine bevorzugte Ausführungsform zeichnet sich dadurch aus, dass das/die Dämpfungselement(e) zur Verringerung ihrer Steifigkeit zumindest einen Einschnitt und/oder zumindest eine Ausnehmung aufweisen, wobei vorzugsweise der zumindest eine Einschnitt und/oder die zumindest eine Ausnehmung quer, vorzugsweise im Wesentlichen senkrecht zu der Auflagefläche der Werkstückauflage verläuft. Solche Bauformen ermöglichen ein unabhängiges Modifizieren von Steifigkeit (Resonanzfrequenz der Werkstückauflage relativ zum Gestell) und Dämpfung des als Tiefpasselement ausgebildeten Dämpfungselementes in Scherrichtung. Die Modifikation kann auf den jeweiligen Anwendungsfall individuell angepasst werden.

Eine bevorzugte Ausführungsform zeichnet sich dadurch aus, dass das/die Dämpfungselement(e) in Richtung senkrecht zur Auflagefläche eine grössere Erstreckung aufweisen als in Richtung parallel zur Auflagefläche und/oder dass zumindest zwei Dämpfungselemente zu einer baulichen Einheit zusammengefasst sind. Dadurch kann ebenfalls eine richtungsabhängige Dämpfung erreicht werden. In Richtungen parallel zur Auflagefläche kann z.B. die Anbindung ,weicher' sein als in Richtung senkrecht dazu, da es vor allem um das Minimieren von Anregungen in der Auflageebene geht.

Eine bevorzugte Ausführungsform zeichnet sich dadurch aus, dass das/die Dämpfungselement(e) aus einem elastomeren Material gebildet ist/sind. Dies ermöglicht eine einfache Realisierung des Erfindungsgedankens. Als Materialien kommen alle möglichen elastomeren Materialien in Frage, wie Gummi-, Kautschuk- und/oder Kunststoffmischungen, die gegebenenfalls zusätzlich ein Gummigranulat enthalten.

Eine bevorzugte Ausführungsform zeichnet sich dadurch aus, dass die Dicke des/der Dämpfungselement(e) im unbelasteten Zustand höchstens 20mm, vorzugsweise höchstens 15mm beträgt, wodurch eine platzsparende aber effiziente Lösung realisiert werden kann.

Eine bevorzugte Ausführungsform zeichnet sich dadurch aus, dass zumindest ein Dämpfungselement an zumindest einer seiner grossen Flächen eine elektrisch leitende Abdeckung, vorzugsweise in Form einer Deckplatte, aufweist, von der ein elektrisch leitender Abschnitt ausgeht, um eine elektrische Verbindung zwischen der Werkstückauflage und einer Messeinrichtung herzustellen. Dies stellt eine elektrische Übertragung von Werkstückauflage zum Gestell, insbesondere die Funktionalität der kapazitiven Abstandsregelung der Düse zur Werkstückoberfläche, sicher, ohne die Steifigkeit oder Dämpfung des als Tiefpasselements ausgebildeten Dämpfungselementes mit der elektrischen Verbindung zu beeinflussen. Dabei wird kein zusätzliches Bauteil verwendet.

Eine bevorzugte Ausführungsform zeichnet sich dadurch aus, dass das Dämpfungselement werkstückauflageseitig an einer am Rahmen der Werkstückauflage befestigten Platte anliegt, die an ihrer Oberseite einen vorragenden Rand aufweist, der das Dämpfungselement abdeckt. Das Dämpfungselement wird dadurch vor der Verschmutzung geschützt. Die Platte mit dem oberen Rand kann z.B. aus einem gebogenen Blech gebildet sein.

Eine bevorzugte Ausführungsform zeichnet sich dadurch aus, dass das/die Dämpfungselement(e) eine Feder oder einen hydraulischen Dämpfer oder ein Piezoelement umfasst. Z.B. sind bei einem Öldämpfer oder dgl. Dämpfungsverhalten und Resonanzfrequenzen unabhängig voneinander beeinflussbar. Auch aktive Dämpfungselemente, wie Tiefpasselemente oder Bandpasselemente wären denkbar, wie z.B. Piezoaktoren, die von einer Steuerung gesteuert werden. Dies ermöglicht eine lastabhängige (d.h. vom Gewicht des Werkstückes abhängige) Einstellung bzw. Konfiguration, z.B. einen Antrieb mit tiefer Eckfrequenz. Die Steifigkeit (Resonanzfrequenz von der Werkstückauflage relativ zum Gestell) und Dämpfung können auf den Anwendungsfall angepasst werden.

Bevorzugt ist das Dämpfungselement ein Reibdämpfungselement, vorzugsweise ein Gummi-Metall-Element, wodurch auch der Effekt der Reibdämpfung zugelassen wird.

Bevorzugt werden ebenfalls gummielastische Dämpfungselemente.

Bevorzugt sind das/die Dämpfungselement(e) von der Strahlbearbeitungsvorrichtung abnehmbar angeordnet, vorzugsweise durch Lösen einer Befestigungseinrichtung. Die Befestigungseinrichtung kann z.B. Schraubverbindungen und oder die bereits erwähnte kraftschlüssige Verbindungseinrichtung bzw. Klemmeinrichtung umfassen.

Die Erfindung bietet die Möglichkeit einfach auswechselbar Dämpfungselemente, die zudem keine ,hoch-spezialisierte' Ausbildung erfordern. Sie sind einfach nachrüstbar, sodass durch eine Modifikation der Dämpfungselemente kundenspezifische Gegebenheiten berücksichtigt werden können.

Weitere Vorteile, Merkmale und Einzelheiten der Erfindung ergeben sich aus der nachfolgenden Beschreibung, in der unter Bezugnahme auf die Zeichnungen Ausführungsbeispiele der Erfindung beschrieben sind. Dabei können die in den Ansprüchen und in der Beschreibung erwähnten Merkmale jeweils einzeln für sich oder in beliebiger Kombination erfindungswesentlich sein.

Die Bezugszeichenliste ist Bestandteil der Offenbarung. Die Figuren werden zusammenhängend und übergreifend beschrieben. Gleiche Bezugszeichen bedeuten gleiche Bauteile, Bezugszeichen mit unterschiedlichen Indices geben funktionsgleiche oder ähnliche Bauteile an.

Es zeigen dabei:
- Fig. 1: eine Strahlbearbeitungsvorrichtung,
- Fig. 2: eine Werkstückauflage mit Dämpfungselementen,
- Fig. 3: eine Werkstückauflage mit Klemmeinrichtung,
- Fig. 4a: eine Ausführungsform eines plattenförmigen Dämpfungselementes,
- Fig. 4b: eine Ausführungsform mit durchgehenden Aussparungen bzw. Ausnehmungen,
- Fig. 5: eine weitere Ausführungsform eines plattenförmigen Dämpfungselementes,
- Fig. 6: ein Dämpfungselement mit elektrisch leitender Abdeckung,
- Fig. 7 und 8: eine weitere Ausführungsform eines Dämpfungselementes,
- Fig. 9: eine schematische Darstellung der Schwingungsverhältnisse,
- Fig. 10: in Abhängigkeit der Frequenz,
- Fig. 11: gemessener Schnittkantenverlauf ohne Dämpfungselemente,
- Fig. 12: gemessener Schnittkantenverlauf mit erfindungsgemässer Strahlbearbeitungsvorrichtung,
- Fig. 13: eine Variante der Erfindung.

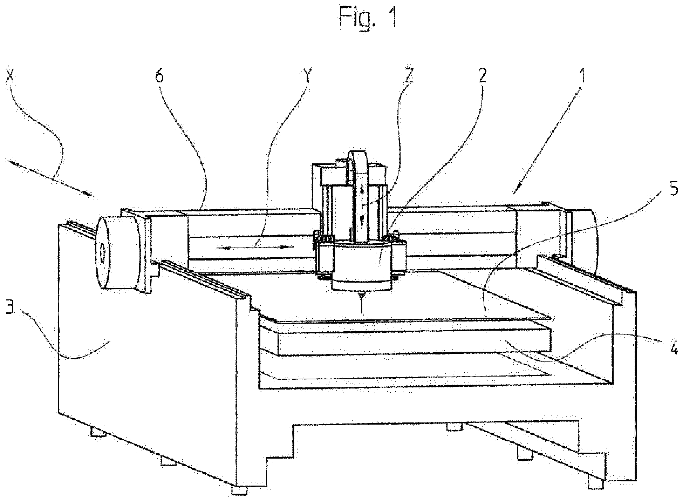

Fig. 1 zeigt eine Strahlbearbeitungsvorrichtung 1 zur Bearbeitung eines Werkstückes 5, insbesondere eine Laserstrahl- oder Fluidstrahl-Bearbeitungsvorrichtung, umfassend ein Gestell 3, eine Werkstückauflage 4, die vom Gestell 3 gehalten wird, und ein Strahlwerkzeug 2, das vom Gestell 3 getragen wird und relativ zur Werkstückauflage 4 verfahrbar ist.

In bevorzugter Ausführungsform kann es sich um eine Platten- und/oder Blechbearbeitungsvorrichtung handeln, wobei insbesondere Werkstücke aus Metall bearbeitet werden.

In der dargestellten Ausführungsform ist das Strahlwerkzeug 2 auf einer Brücke 6 entlang der Antriebsachsen Y, Z verfahrbar gelagert. Die Brücke 6 wiederum ist entlang der Antriebsachse X verfahrbar. Weitere, auch redundante Bewegungsachsen sind möglich.

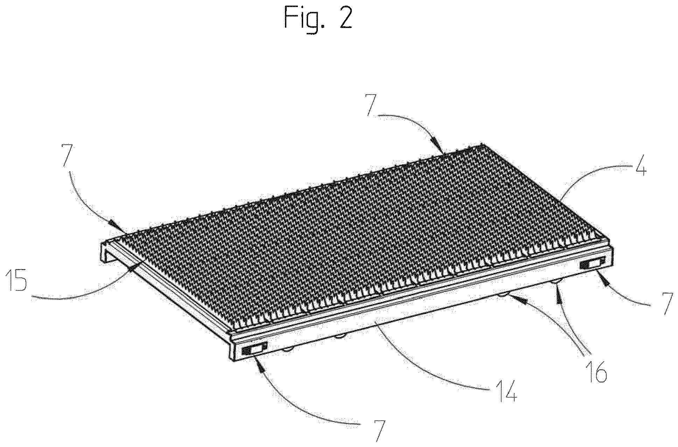

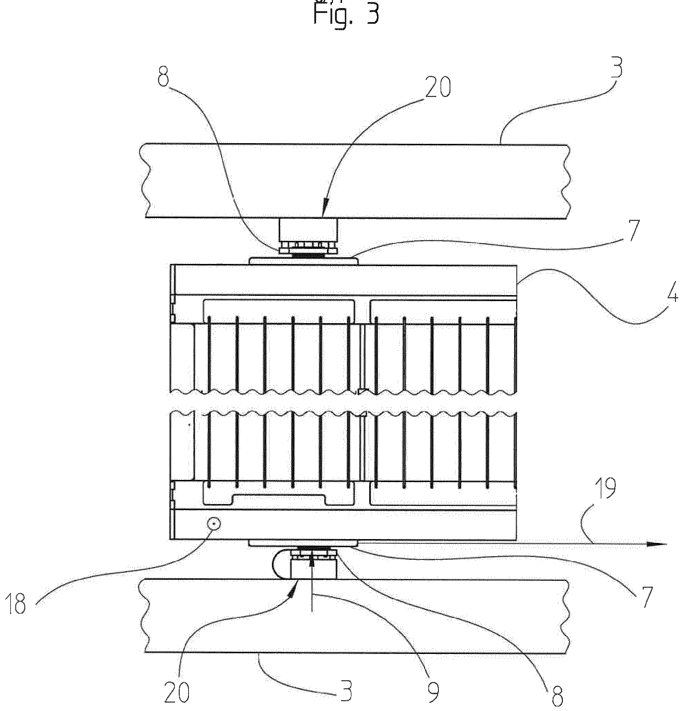

Fig. 2 zeigt eine Werkstückauflage 4, deren Auflagefläche 15 durch eine Vielzahl an Rostelementen gebildet bzw. definiert sein kann. Die Werkstückauflage 4 weist einen Rahmen 14 auf. Dieser kann über Rollen 16 am Gestell 3 verfahrbar aufliegen. Die Anbindung der Werkstückauflage 4 an das Gestell 3 erfolgt über zumindest ein Dämpfungselement 7 - in Fig. 2 und 3 über vier, in den Eckbereichen des Rahmens angeordnete Dämpfungselemente 7.

Wie aus Fig. 3 zu sehen umfasst die Anbindung der Werkstückauflage 4 an das Gestell 3 zumindest eine kraftschlüssige Verbindungseinrichtung in Form einer Klemmeinrichtung 8. Durch diese ist die Werkstückauflage 4 an dem Gestell 3 fixierbar. In dem in Fig. 3 dargestellten fixierten Zustand sind die Dämpfungselemente 7 zwischen Werkstückauflage 4 und Gestell 3 eingeklemmt angeordnet.

Die Anbindung erfolgt hier so, dass Aktuatoren 20, insbesondere in Form von Druckzylindern, durch Betätigung in Richtung Werkstückauflage 4 bewegt werden und gleichzeitig die Werkstückauflage 4 und die Dämpfungselemente 7 klemmen.

Die Klemmeinrichtung 8 ist vorzugsweise lösbar, d.h. die auf die Dämpfungselemente 7 drückenden Klemmbacken können von den Dämpfungselementen 7 wegbewegt werden. Im Beispiel von Fig. 3 ist die Werkstückauflage 4 von gegenüberliegenden Seiten einklemmbar, wobei im eingeklemmten Zustand die Dämpfungselemente 7 jeweils zwischen der Werkstückauflage 4 und der Klemmeinrichtung 8 bzw. ihren Klemmbacken eingeklemmt sind. In der in Fig. 3 dargestellten Ausführungsform umfasst die Klemmeinrichtung 8 zumindest zwei Aktoren 20, die von gegenüberliegenden Seiten die Werkstückauflage 4 zwischen sich einklemmen. Alternativ wäre es denkbar, das nur an einer Seite ein Aktor 20 vorgesehen ist, während auf der gegenüberliegenden Seite ein passiver, vorzugsweise stationärer Gegenanschlag ein Einklemmen ermöglicht.

Die Klemmrichtung 9 steht im Wesentlichen parallel zur Auflagefläche 15 der Werkstückauflage 4. Die Dämpfungselemente 7 sind in der dargestellten Ausführungsform plattenförmig, insbesondere als Schwingungsisolationsplatten, ausgebildet und stehen im Wesentlichen senkrecht (Richtung 18) zur Auflagefläche 15 der Werkstückauflage 4. Wie aus Fig. 3 zu sehen ist, werden die Schwingungsisolationsplatten in Scherrichtung (Richtung 19) eingesetzt. Dabei kann eine Bauform gewählt werden, welche die Maschinendimensionen bestehender Anlagen nicht verändert. Die durch das plattenförmige Dämpfungselement 7 bewirkte Dämpfung umfasst eine Dämpfungsrichtung bzw. eine Dämpfungskomponente, die parallel zur Auflagefläche 15 der Werkstückauflage 4 steht.

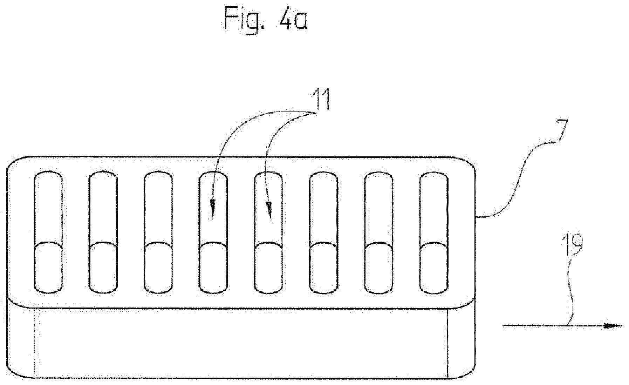

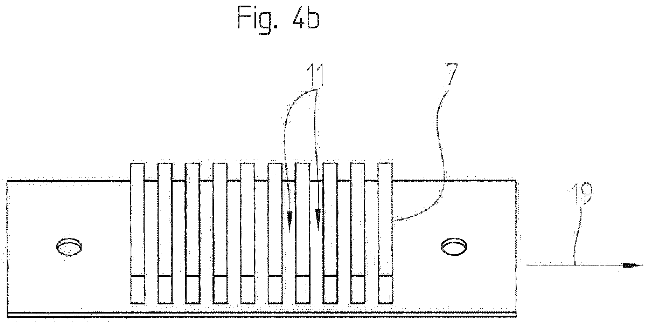

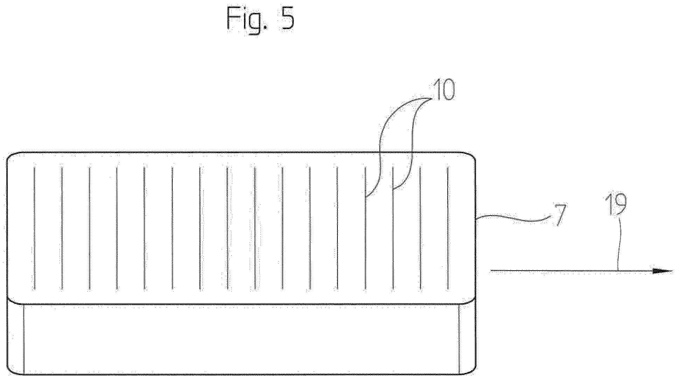

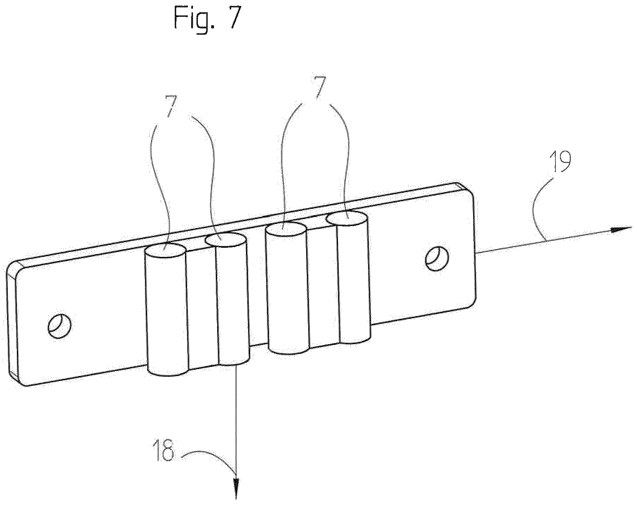

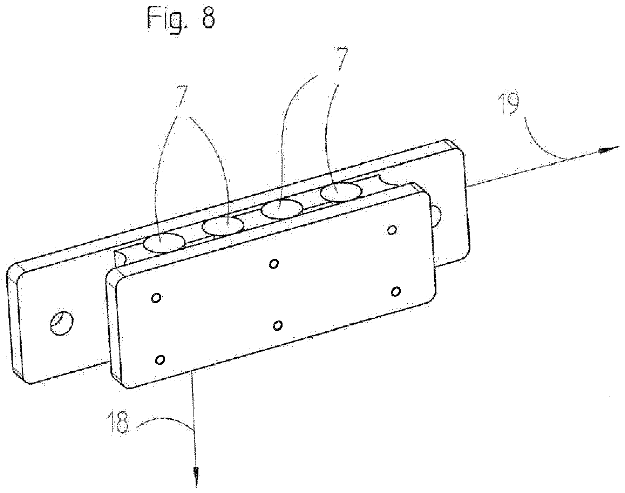

Wie in den Fig. 4a, 4b und 5 zu sehen können die Dämpfungselemente 7 zur Verringerung ihrer Steifigkeit in einer bestimmten Richtung Einschnitte 10 und/oder Ausnehmungen 11 quer zur Plattenfläche aufweisen. Im eingebauten Zustand verlaufen diese Einschnitt 10 und/oder Ausnehmungen 11 quer bzw. im Wesentlichen senkrecht zu der Auflagefläche 15 der Werkstückauflage 4. Dadurch kann eine richtungsabhängige Steifigkeit erreicht werden. Bevorzugt kann auf diese Art die Schersteifigkeit und somit die Resonanzfrequenz reduziert werden. Die Fig. 7 und 8 zeigen eine weitere bevorzugte Ausführungsform, bei der die Dämpfungselemente 7 in einer Richtung 18 senkrecht zur Auflagefläche 15 der Werkstückauflage 4 eine grössere Erstreckung aufweisen als in einer Richtung 19 parallel zur Auflagefläche 15. Konkret handelt es sich hier um zylinderförmige oder stabförmige Dämpfungselemente 7. Hier sind mehrere (hier: vier) in Richtung parallel zur Auflagefläche 15 benachbart angeordnete Dämpfungselemente 7 zu einer baulichen bzw. funktionalen Einheit zusammengefasst, d.h. die Dämpfungselemente 7 der baulichen Einheit werden durch dieselben Gegenplatten bzw. Gegenstücke eingeklemmt.

Die Dämpfungselemente 7 sind vorzugsweise aus einem elastomeren Material gebildet. Die Dicke der plattenförmigen Dämpfungselemente 7 beträgt im unbelasteten Zustand vorzugsweise höchstens 20mm, vorzugsweise höchstens 15mm.

In einer möglichen Ausführungsform können die Dämpfungselemente 7 (z.B. nach Art der Fig. 5) in geklemmtem Zustand in einer (ersten) Richtung 19, die parallel zur Auflagefläche 15 der Werkstückauflage 4 und senkrecht zur Klemmrichtung 9 steht, jeweils eine kleinere Steifigkeit aufweisen als in einer (zweiten) Richtung 18 senkrecht zur Auflagefläche 15.

In einer weiteren möglichen Ausführungsform können die Dämpfungselemente 7 in geklemmtem Zustand in einer (ersten) Richtung 19, die parallel zur Auflagefläche 15 der Werkstückauflage 4 und senkrecht zur Klemmrichtung 9 steht, eine kleinere Steifigkeit aufweisen als in Klemmrichtung 9.

Diese Optionen geben Möglichkeiten für richtungsabhängige Dämpfung vor, wobei die Dämpfungswirkung in zumindest einer Richtung parallel zur Auflagefläche gross sein soll, wohingegen eine geringere Dämpfungswirkung in anderen Richtungen eine zuverlässige Fixierung der Werkstückauflage gewährleisten.

Im Zusammenhang mit der in Fig. 1 dargestellten Ausführungsform ist das Strahlwerkzeug 2 über lineare Antriebsachsen X, Y, die im Wesentlichen parallel zur Auflagefläche 15 der Werkstückauflage 4 verlaufen, mit dem Gestell 3 verbunden. Dabei weisen die eingebauten Dämpfungselemente 7 in einer Richtung 19, die parallel zu der Antriebsachse X mit dem grössten Trägheitsmoment steht (grosse Masse der Brücke 6), eine kleinere Steifigkeit auf als in einer Richtung Y senkrecht zu der Antriebsachse X mit dem grössten Trägheitsmoment. Das grösste Trägheitsmoment kann dabei in Bezug auf die Steifigkeit des Gestells gesehen werden.

In Bezug auf Fig. 1 bedeutet dies, dass das Strahlwerkzeug 2 auf einer Brücke 6 angeordnet ist, die entlang einer Verfahrrichtung X bewegbar ist, und dass in eingebautem Zustand die Steifigkeit der Dämpfungselemente 7 in einer Richtung 19, die parallel zur Verfahrrichtung X der Brücke 6 steht, kleiner ist als in einer Richtung Y, die senkrecht zur Verfahrrichtung X der Brücke 6 steht.

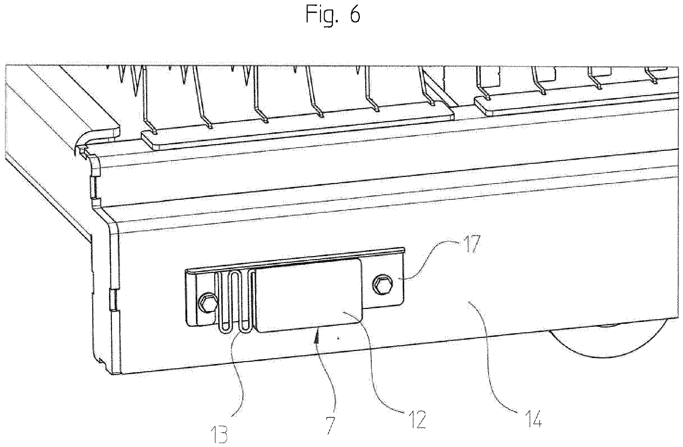

Fig. 6 zeigt eine bevorzugte Ausführungsform, bei der ein Dämpfungselement 7 an zumindest einer seiner grossen Flächen eine elektrisch leitende Abdeckung 12, vorzugsweise in Form einer Deckplatte, aufweist, von der ein elektrisch leitender Abschnitt 13 - vorzugsweise in Schlange- bzw. Mäanderform - ausgeht, um eine elektrische Verbindung zwischen der Werkstückauflage 4 und einer Messeinrichtung herzustellen. Die Messeinrichtung kann eine kapazitive Messeinrichtung zur Messung des Abstandes zwischen der Strahlaustrittsdüse und der Werkstückoberfläche sein. Die elektrische Verbindung beeinträchtigt die Dämpfungswirkung des Dämpfungselementes 7 nicht.

Das Dämpfungselement 7 kann werkstückauflageseitig an einer am Rahmen 14 der Werkstückauflage 4 befestigten Platte 17, vorzugsweise Metallplatte, anliegen. Die Platte 17 kann einen an ihrer Oberseite vorragenden Rand aufweisen, der das Dämpfungselement 7 abdeckt und vor übermässiger Verschmutzung schützt.

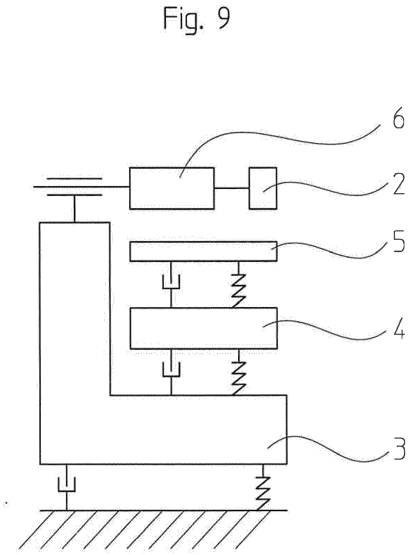

Fig. 9 zeigt zur Veranschaulichung das mechanische Ersatzschaltbild in Form eines Feder-Masse-Dämpfungs-Modells einer möglichen erfindungsgemässen Strahlbearbeitungsvorrichtung 1. Wie bereits eingangs erwähnt kann nun in einem schwingungsübertragenden Verbindungspfad zwischen dem Strahlwerkzeug 2 und der durch die Werkstückauflage 4 gebildeten Auflagefläche zumindest ein Dämpfungselement, vorzugsweise mehrere parallel geschaltete und bevorzugt in Abständen voneinander angeordnete Dämpfungselemente, eingebaut sein. In der schematischen Darstellung gemäss Fig. 9 kann z.B. die Anordnung eines oder mehrerer Dämpfungselemente zwischen Strahlwerkzeug 2 und Brücke 6 und/oder zwischen Brücke 6 und Gestell 3 und/oder zwischen Gestell 3 und Werkstückauflage 4 erfolgen. Ebenso wäre es denkbar, dass das/die Dämpfungselement(e) in einem der genannten Bauteile integriert wäre(n). Die Dämpfungselemente können auch die Auflagefläche für das Werkstück 5 bilden.

Fig. 10 zeigt die überaus positiven Auswirkungen auf die Resonanzfrequenz des Systems Werkstückauflage-Gestell, insbesondere die Erniedrigung der Resonanzfrequenz. Das Diagramm zeigt die Antworten (Auslenkungen in m in Richtung 19) auf einen Beschleunigungssprung der Brücke 6 (Beschleunigung in m/s2 in Richtung 19) in Abhängigkeit der Frequenz von Gestell 3, Werkstückaufnahme 4 und Werkstück 5.

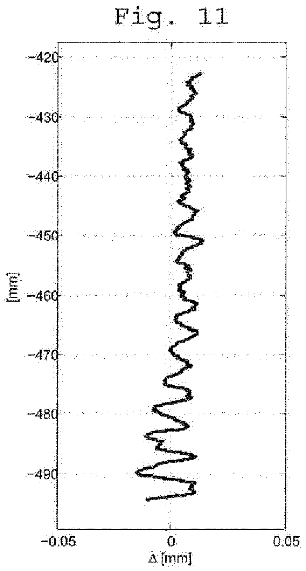

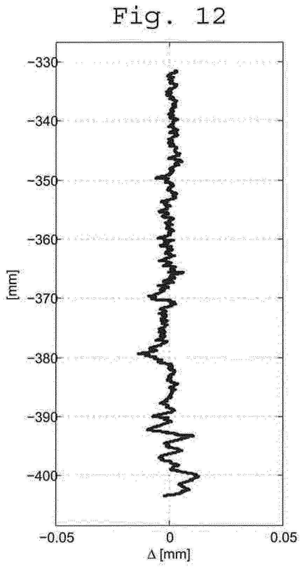

Fig. 11 zeigt die Kontur einer Schnittkante ohne Dämpfungselemente 7 mit ausgeprägtem Wellenphänomen. Anhand der Fig. 12 ist ersichtlich, wie positiv die Auswirkungen der erfindungsgemässen Massnahme im Hinblick auf die Schneidqualität sind.

Das erfindungsgemässe Prinzip wird anhand der Fig. 9 bis 12 näher erläutert: Der durch die Werkstückanregung verursachte Wellenschnitt (Fig. 11) kann auf die Relativbewegung des Werkstückes 5 zum Gestell 3 zurückgeführt werden. Die Problembeschreibung kann in drei Systeme, welche die Anregung durch die Brücke 6 und/oder das Strahlwerkzeug 2 übertragen, unterteilt werden (Fig. 9):
- Boden-Gestell System (Aufstellung)
- Gestell-Werkstückauflage System (Anbindung bzw. Klemmung)
- Werkstückauflage-Werkstück System (Aufliegen)

Die Erfindung liegt insbesondere darin, das Gestell-Werkstückauflage-System gezielt beeinflussen.

Damit die Anregung von der Werkstückauflage 4 auf das Werkstück 5 verringert werden kann, wurde erkannt, dass die Resonanzfrequenz der Werkstückauflage 4 gegenüber dem Gestell 3 tiefer sein muss als die Resonanzfrequenz des Werkstückes 5 relativ zur Werkstückauflage 4. Dies kann über das Einfügen von Dämpfungselementen 7, insbesondere Schwingungsisolationsplatten, in die Anbindung zwischen Gestell 3 und Werkstückauflage 4 erreicht werden. Die Dämpfungselemente 7 beeinflussen wie eine Art Tiefpassfilter die Übertragung vom Gestell 3 zur Werkstückauflage 4. Das System kann durch Einfügen von weichen und möglichst gut dämpfenden Elementen (z.B. Schwingungsisolationsplatten) in Scherrichtung besonders gut modifiziert werden, wobei die Resonanzfrequenz der Übertragungsfunktion des Gestell-Werkstückauflage Systems stark reduziert werden kann.

Die in Fig. 10 dargestellten Messungen wurden mit kommerziell erhältlichen Schwingungsisolationsplatten (insbesondere BiLoc® 410 und AirLoc® 715 der Firma AirLoc® Schrepfer AG) durchgeführt, wobei diese gemäss Fig. 3 eingeklemmt sind. Dabei spiegeln die dicken Linien die ungedämpfte Situation (gemäss dem Stand der Technik) wider. Die dünnen Kurven zeigen, dass eine wesentliche Verringerung der Resonanzfrequenz des Werkstückauflage-Gestell-Systems erzielt werden konnte.

Die Resonanzfrequenz des Teilsystems Gestell-Werkstückauflage liegt (gemäss Stand der Technik) relativ nahe an oder über dem Resonanzfrequenzbereich des Werkstückauflage-Werkstück-Systems. Wird die Anbindung der Werkstückauflage 4 an das Gestell 3 weicher, so liegt die Resonanzfrequenz weiter weg (d.h. tiefer) und regt das Werkstückauflage-Werkstücksystem-System weniger an.

Ziel der Anbindung ist es also, die Werkstückauflage 4 im Bereich der hohen Frequenzen (in vorliegendem Beispiel hat sich eine kritische von ca.12 Hz gezeigt) möglichst wenig anzuregen. Dies kann erreicht werden, indem das Teilsystem Gestell-Werkstückauflage eine möglichst tiefe Resonanzfrequenz hat.

Fig. 10 zeigt die Antwort des Gestells 3 auf einen Beschleunigungssprung der Brücke 6 mit Strahlwerkzeug 2 und die Antwort der Werkstückauflage 4 mit plattenförmigen Dämpfungselementen (dünne Kurve, mit einem Maximum bei 7Hz) und ohne Dämpfungselementen (dicke Kurve, mit einem Maximum bei ca. 13Hz). Dabei wird ersichtlich, dass sich die Werkstückauflage 4 mit Dämpfungselementen 7 zwar mehr bewegt als ohne Dämpfungselemente, diese Bewegung aber bei einer wesentlich tieferen Frequenz (um 7 Hz) vollführt. Bei der oben für das Beispiel identifizierten kritischen Frequenz (von ca. 12Hz) bewegt sich die Werkstückauflage 4 mit Dämpfungselementen 7 3mal weniger als ohne Dämpfungselemente.

Das Wellenphänomen konnte klar reduziert werden (Fig. 12).

Die Erfindung ist nicht auf die dargestellten Ausführungsformen beschränkt, so können die Dämpfungselemente 7 auch in Form von Feder-Dämpfer Elementen, hydraulischen Dämpfern und/oder Piezoelementen ausgebildet sein.

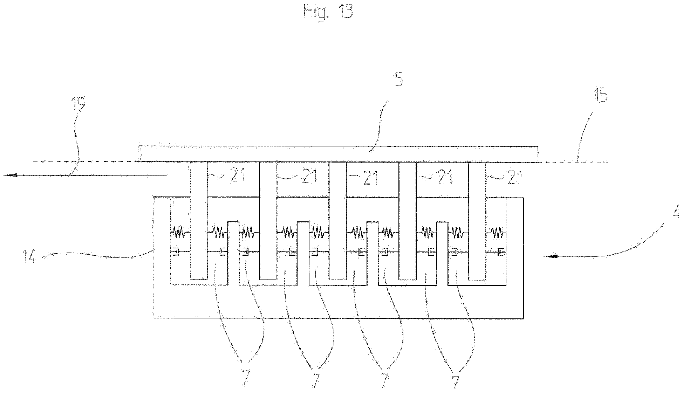

Eine weitere Variante der Erfindung zeigt Fig. 13. Die Werkstückauflage 4 umfasst einen Rahmen 14 und am Rahmen 14 gelagerte Rostelemente 21. Die Rostelemente 21 sind mit dem Rahmen 14 über Dämpfungselemente 7 (hier: in Form von Feder-Dämpfer-Elementen) verbunden. D.h. hier sind die Dämpfungselemente 7 zwischen den einzelnen Rostelementen 21 und dem Rahmen 14 der Werkstückauflage 4 eingebaut, d.h. die Schwingungsentkopplung erfolgt in dieser Ausführungsform zwischen dem Rahmen 14 und den Rostelementen 21.

Wie aus Fig. 13 zu sehen sind die Dämpfungselemente 7 in Form von Feder-Dämpfer-Elementen parallel zur Auflagefläche 15 orientiert, d.h. die Dämpfungsrichtung der Dämpfungselemente 7 (Richtung 19) steht daher im Wesentlichen parallel zur Auflagefläche 15 der Werkstückauflage 4. Fig. 13 zeigt ein Beispiel dafür, dass die Dämpfungselemente 7 in der Werkstückauflage 4 selbst integriert sein können. Die Feder-Dämpfer-Elemente könnten auch zur Auflagefläche 15 geneigt orientiert sein. Bevorzugt ist jedoch, wenn zumindest eine Richtungskomponente der durch die Dämpfungselemente 7 vermittelten Dämpfung parallel zur Auflagefläche 15 steht (so wie auch in der Ausführungsform der Fig. 3), sodass eine Schwingungsentkopplung in dieser Richtung 19 gewährleistet werden kann.

Die Erfindung ist nicht auf die beschriebenen Ausführungsformen und die darin hervorgehobenen Aspekte beschränkt. Vielmehr ist innerhalb des Erfindungsgedankens eine Vielzahl von Abwandlungen möglich, die im Rahmen fachmännischen Handelns liegen. Ebenso ist es möglich, durch Kombination der genannten Mittel und Merkmale weitere Ausführungsvarianten zu realisieren, ohne den Rahmen der Erfindung zu verlassen.

### Bezugszeichenliste

- 1: Strahlbearbeitungsvorrichtung
- 2: Strahlwerkzeug
- 3: Gestell
- 4: Werkstückauflage
- 5: Werkstück
- 6: Brücke
- 7: Dämpfungselement
- 8: Klemmeinrichtung
- 9: Klemmrichtung
- 10: Einschnitt
- 11: Ausnehmung
- 12: Abdeckung
- 13: elektrisch leitender Abschnitt
- 14: Rahmen
- 15: Auflagefläche
- 16: Rollen
- 17: Metallplatte
- 18: Richtung senkrecht zur Auflagefläche 15
- 19: Richtung parallel zur Auflagefläche 15
- 20: Aktor
- 21: Rostelement

## Patentansprüche

1. Strahlbearbeitungsvorrichtung (1) zur Bearbeitung eines Werkstückes (5), insbesondere eine Laserstrahl- oder Fluidstrahl-Bearbeitungsvorrichtung, umfassend ein Gestell (3), eine Werkstückauflage (4), die vom Gestell (3) gehalten wird, und ein Strahlwerkzeug (2), das vom Gestell (3) getragen wird und relativ zur Werkstückauflage (4) verfahrbar ist, **dadurch gekennzeichnet, dass** in einem schwingungsübertragenden Verbindungspfad zwischen dem Strahlwerkzeug (2) und der durch die Werkstückauflage (4) definierten Auflagefläche für das Werkstück (5) zumindest ein Dämpfungselement (7), vorzugsweise mehrere parallel geschaltete und bevorzugt in Abständen voneinander angeordnete Dämpfungselemente (7), eingebaut ist/sind.

2. Strahlbearbeitungsvorrichtung nach Anspruch 1, **dadurch gekennzeichnet, dass** eine Dämpfungsrichtung (19) der durch das zumindest eine Dämpfungselement (7) vermittelten Dämpfung im Wesentlichen parallel zur Auflagefläche der Werkstückauflage (4) steht.

3. Strahlbearbeitungsvorrichtung nach Anspruch 1 oder 2, **dadurch gekennzeichnet, dass** das/die Dämpfungselement(e) (7) in der Werkstückauflage (4) integriert ist/sind, wobei vorzugsweise die Werkstückauflage (4) einen Rahmen (14) und am Rahmen (14) gelagerte Rostelemente (21) umfasst, wobei die Rostelemente (21) mit dem Rahmen (14) über das/die Dämpfungselement(e) (7) verbunden sind.

4. Strahlbearbeitungsvorrichtung nach Anspruch 1 oder 2, **dadurch gekennzeichnet, dass** zumindest ein Dämpfungselement, vorzugsweise mehrere Dämpfungselemente (7) zwischen dem Gestell (3) und der Werkstückauflage (4) eingebaut ist/sind, vorzugsweise von der Anbindung der Werkstückauflage (4) an das Gestell (3) umfasst ist/sind.

5. Strahlbearbeitungsvorrichtung nach Anspruch 4, **dadurch gekennzeichnet, dass** die Anbindung der Werkstückauflage (4) an das Gestell (3) zumindest eine kraftschlüssige Verbindungseinrichtung (8) umfasst, durch die die Werkstückauflage (4) an dem Gestell (3) fixierbar ist, und dass im fixierten Zustand das/die Dämpfungselement(e) (7) in einer Klemmrichtung zwischen Werkstückauflage (4) und Gestell (3) eingeklemmt angeordnet ist/sind.

6. Strahlbearbeitungsvorrichtung nach Anspruch 4 oder 5, **dadurch gekennzeichnet, dass** die Anbindung der Werkstückauflage (4) an das Gestell zumindest eine, vorzugsweise lösbare, Klemmeinrichtung (8) umfasst, durch die die Werkstückauflage (4) von gegenüberliegenden Seiten einklemmbar ist, wobei im eingeklemmten Zustand das/die Dämpfungselement(e) (7) jeweils zwischen der Werkstückauflage (4) und der Klemmeinrichtung (8) eingeklemmt ist/sind.

7. Strahlbearbeitungsvorrichtung nach Anspruch 5 oder 6, **dadurch gekennzeichnet, dass** die Klemmrichtung (9) im Wesentlichen parallel zur Auflagefläche (15) der Werkstückauflage (4) steht.

8. Strahlbearbeitungsvorrichtung nach einem der vorhergehenden Ansprüche, **dadurch gekennzeichnet, dass** die Anbindung der Werkstückauflage (4) an das Gestell (3) in ihrer Gesamtheit derart ausgebildet ist, dass die Resonanzfrequenz der Werkstückauflage (4) relativ zum Gestell (3) in zumindest einer Richtung parallel zur Auflagefläche (15) kleiner ist als in Richtung senkrecht zur Auflagefläche (15) **und/oder dass** das/die Dämpfungselement(e) (7) derart ausgebildet sind, dass die Resonanzfrequenz der Werkstückauflage (4) in Bezug auf das Gestell (3) in zumindest einer Richtung parallel zur Auflagefläche (15) einen Wert von höchstens 10Hz, vorzugsweise von höchstens 8Hz aufweist.

9. Strahlbearbeitungsvorrichtung nach einem der vorhergehenden Ansprüche, **dadurch gekennzeichnet, dass** das Strahlwerkzeug (2) über lineare Antriebsachsen (X, Y), die im Wesentlichen parallel zur Auflagefläche (15) der Werkstückauflage (4) verlaufen, mit dem Gestell (3) verbunden ist und dass das/die Dämpfungselement(e) (7) in eingebautem Zustand in einer Richtung, die parallel zu der Antriebsachse (X) mit dem grössten Trägheitsmoment oder parallel zur Richtung, in der bei maximaler Beschleunigung des Strahlwerkzeuges (2) relativ zum Gestell (3) eine maximale Auslenkung bzw. Anregung des Gestells (3) erfolgt, steht, eine kleinere Steifigkeit aufweisen als in einer Richtung senkrecht zu der Antriebsachse (X) mit dem grössten Trägheitsmoment oder senkrecht zur Richtung, in der bei maximaler Beschleunigung des Strahlwerkzeuges (2) relativ zum Gestell (3) eine maximale Auslenkung bzw. Anregung des Gestells (3) erfolgt.

10. Strahlbearbeitungsvorrichtung nach einem der vorhergehenden Ansprüche, **dadurch gekennzeichnet, dass** das Strahlwerkzeug (2) auf einer Brücke (6) angeordnet ist, die entlang einer Verfahrrichtung (X) bewegbar ist, und dass in eingebautem Zustand die Steifigkeit des/der Dämpfungselement(e) (7) in einer Richtung, die parallel zur Verfahrrichtung (X) der Brücke (6) oder parallel zur Richtung, in der bei maximaler Beschleunigung der Brücke (6) relativ zum Gestell (3) eine maximale Auslenkung bzw. Anregung des Gestells (3) erfolgt, steht, kleiner ist/sind als in einer Richtung, die senkrecht zur Verfahrrichtung (X) der Brücke (6) oder senkrecht zur Richtung, in der bei maximaler Beschleunigung der Brücke (6) relativ zum Gestell (3) eine maximale Auslenkung bzw. Anregung des Gestells (3) erfolgt, steht.

11. Strahlbearbeitungsvorrichtung nach einem der vorhergehenden Ansprüche, **dadurch gekennzeichnet, dass** das/die Dämpfungselement(e) (7) plattenförmig ausgebildet sind und vorzugsweise quer, besonders bevorzugt im Wesentlichen senkrecht zur Auflagefläche (15) der Werkstückauflage (4) stehen.

12. Strahlbearbeitungsvorrichtung nach einem der vorhergehenden Ansprüche, **dadurch gekennzeichnet, dass** das/die Dämpfungselement(e) (7) zur Verringerung ihrer Steifigkeit zumindest einen Einschnitt (10) und/oder zumindest eine Ausnehmung (11) aufweisen, wobei vorzugsweise der zumindest eine Einschnitt (10) und/oder die zumindest eine Ausnehmung (11) quer, vorzugsweise im Wesentlichen senkrecht zu der Auflagefläche (15) der Werkstückauflage (4) verläuft.

13. Strahlbearbeitungsvorrichtung nach einem der vorhergehenden Ansprüche, **dadurch gekennzeichnet, dass** das/die Dämpfungselement(e) (7) in Richtung senkrecht zur Auflagefläche (15) der Werkstückauflage (4) eine grössere Erstreckung aufweisen als in Richtung parallel zur Auflagefläche (15) **und/oder dass** zumindest zwei in Richtung parallel zur Auflagefläche (15) benachbart angeordnete Dämpfungselemente (7) zu einer baulichen Einheit zusammengefasst sind.

14. Strahlbearbeitungsvorrichtung nach einem der vorhergehenden Ansprüche, **dadurch gekennzeichnet, dass** das/die Dämpfungselement(e) (7) aus einem elastomeren Material gebildet ist/sind **und/oder dass** die Dicke des/der Dämpfungselement(e) (7) im unbelasteten Zustand höchstens 20mm, vorzugsweise höchstens 15mm beträgt.

15. Strahlbearbeitungsvorrichtung nach einem der vorhergehenden Ansprüche, **dadurch gekennzeichnet, dass** zumindest ein Dämpfungselement (7) an zumindest einer seiner grossen Flächen eine elektrisch leitende Abdeckung (12), vorzugsweise in Form einer Deckplatte, aufweist, von der ein elektrisch leitender Abschnitt (13) ausgeht, um eine elektrische Verbindung zwischen der Werkstückauflage (4) und einer Messeinrichtung herzustellen.

16. Strahlbearbeitungsvorrichtung nach einem der vorhergehenden Ansprüche, **dadurch gekennzeichnet, dass** das Dämpfungselement (7) werkstückauflageseitig an einer am Rahmen (14) der Werkstückauflage (4) befestigten Platte (17), vorzugsweise Metallplatte, anliegt, die an ihrer Oberseite einen vorragenden Rand aufweist, der das Dämpfungselement (7) abdeckt.

17. Strahlbearbeitungsvorrichtung nach einem der vorhergehenden Ansprüche, **dadurch gekennzeichnet, dass** das/die Dämpfungselement(e) (7) eine Feder oder einen hydraulischen Dämpfer oder ein Piezoelement umfasst, oder dass das Dämpfungselement (7) ein Reibdämpfungselement ist, vorzugsweise ein Gummi-Metall-Element.

18. Strahlbearbeitungsvorrichtung nach einem der vorhergehenden Ansprüche, **dadurch gekennzeichnet, dass** das/die Dämpfungselement(e) (7) abnehmbar an der Strahlbearbeitungsvorrichtung (1) ausgebildet sind, vorzugsweise durch Lösen einer Befestigungseinrichtung.

## Claims

1. A beam machining device (1) for purposes of treating a workpiece (5), in particular a laser beam machining device, or a fluid jet machining device, comprising a frame (3), a workpiece support (4), which is held by the frame (3), and a beam machining tool (2), which is supported by the frame (3) and can be moved relative to the workpiece support (4), **characterised in that** at least one damping element (7), preferably a plurality of damping elements (7) preferably connected in parallel, and preferably arranged spaced apart from one another, is/are installed in a connecting path transmitting vibration between the beam machining tool (2) and the support surface for the workpiece (5) defined by the workpiece support (4).

2. The beam machining device in accordance with claim 1, **characterised in that** a damping direction (19), which, by virtue of the damping imparted by the at least one damping element (7), is oriented essentially parallel to the support surface of the workpiece support (4).

3. The beam machining device in accordance with claim 1 or 2, **characterised in that** the one or more damping elements (7) is/are integrated in the workpiece support (4), wherein the workpiece support (4) preferably comprises a frame (14) and grating elements (21) mounted on the frame (14), wherein the grating elements (21) are connected with the frame (14) via the one or more damping elements (7).

4. The beam machining device in accordance with claim 1 or 2, **characterised in that** at least one damping element, preferably a plurality of damping elements (7), is/are installed between the frame (3) and the workpiece support (4), and is/are preferably comprised of the connection of the workpiece support (4) to the frame (3).

5. The beam machining device in accordance with claim 4, **characterised in that** the connection of the workpiece support (4) to the frame (3) comprises at least one force-fit connecting device (8), by means of which the workpiece support (4) can be fixed onto the frame (3), and **in that** in the fixed state the one or more damping elements (7) is/are arranged clamped in a clamping direction between the workpiece support (4) and the frame (3).

6. The beam machining device in accordance with claim 4 or 5, **characterised in that** the connection of the workpiece support (4) to the frame comprises at least one preferably detachable clamping device (8), by means of which the workpiece support (4) can be clamped from opposite sides, wherein in the clamped state the one or more damping elements (7) is/are in each case clamped between the workpiece support (4) and the clamping device (8).

7. The beam machining device in accordance with claim 5 or 6, **characterised in that** the clamping direction (9) runs essentially parallel to the support surface (15) of the workpiece support (4).

8. The beam machining device in accordance with one of the preceding claims, **characterised in that** in its entirety the connection of the workpiece support (4) to the frame (3) is configured such that the resonant frequency of the workpiece support (4) relative to the frame (3) in at least one direction parallel to the support surface (15) is less than in a direction at right angles to the support surface (15), and/or **in that** the one or more damping elements (7) is/are configured such that the resonant frequency of the workpiece support (4) with reference to the frame (3) in at least one direction parallel to the support surface (15) has a maximum value of 10 Hz, preferably a maximum value of 8 Hz.

9. The beam machining device in accordance with one of the preceding claims, **characterised in that** the beam machining tool (2) is connected with the frame (3) via linear drive axes (X, Y), which run essentially parallel to the support surface (15) of the workpiece support (4), and **in that** in the installed state the one or more damping elements (7) have a lower stiffness in a direction that runs parallel to the drive axis (X) with the greatest moment of inertia, or parallel to the direction in which, with maximum acceleration of the beam machining tool (2) relative to the frame (3), a maximum deflection and/or excitation of the frame (3) occurs, than in a direction at right angles to the drive axis (X) with the greatest moment of inertia, or at right angles to the direction in which, with maximum acceleration of the beam machining tool (2) relative to the frame (3), a maximum deflection and/or excitation of the frame (3) occurs.

10. The beam machining device in accordance with one of the preceding claims, **characterised in that** the beam machining tool (2) is arranged on a bridge (6), which can be moved along a direction (X), and **in that** in the installed state the stiffness of the one or more damping elements (7) in a direction that runs parallel to the direction (X) of the bridge (6), or parallel to the direction in which, with maximum acceleration of the bridge (6) relative to the frame (3), a maximum deflection and/or excitation of the frame (3) occurs, is/are smaller than in a direction that runs at right angles to the direction (X) of the bridge (6), or at right angles to the direction in which, with maximum acceleration of the bridge (6) relative to the frame (3), a maximum deflection and/or excitation of the frame (3) occurs.

11. The beam machining device in accordance with one of the preceding claims, **characterised in that** the one or more damping elements (7) are configured in the form of plates and preferably stand essentially at right angles to the support surface (15) of the workpiece support (4).

12. The beam machining device in accordance with one of the preceding claims, **characterised in that** for purposes of reducing their stiffness, the one or more damping elements (7) have at least one incision (10) and/or at least one recess (11), wherein the at least one incision (10) and/or the at least one recess (11) preferably runs transversely, preferably essentially at right angles, to the support surface (15) of the workpiece support (4).

13. The beam machining device in accordance with one of the preceding claims, **characterised in that** the one or more damping elements (7) have a greater extent in a direction at right angles to the support surface (15) of the workpiece support (4) than in the direction parallel to the support surface (15) and/or in that at least two damping elements (7), arranged adjacently in a direction parallel to the support surface (15), are assembled into a structural unit.

14. The beam machining device in accordance with one of the preceding claims, **characterised in that** the one or more damping elements (7) is/are formed from an elastomer material and/or **in that** the thickness of the one or more damping elements (7) in the unloaded state is a maximum of 20 mm, preferably a maximum of 15 mm.

15. The beam machining device in accordance with one of the preceding claims, **characterised in that** at least one damping element (7), on at least one of its large surfaces, has an electrically conducting covering (12), preferably in the form of a cover plate, from which an electrically conducting section (13) emanates, in order to establish an electrical connection between the workpiece support (4) and a measuring device.

16. The beam machining device in accordance with one of the preceding claims, **characterised in that** the damping element (7) on the workpiece support side sits against a plate (17), preferably a metal plate, attached to the frame (14) of the workpiece support (4), which plate on its upper face has a projecting edge that covers the damping element (7).

17. The beam machining device in accordance with one of the preceding claims, **characterised in that** the one or more damping elements (7) comprise a spring or a hydraulic damper, or a piezo element, or **in that** the damping element (7) is a friction damping element, preferably a rubber-metal element.

18. The beam machining device in accordance with one of the preceding claims, **characterised in that** the one or more damping elements (7) are configured such that they can be removed from the beam machining device (1), preferably by the release of an attachment device.

## Revendications

1. Dispositif d'usinage par rayonnement (1) pour usiner une pièce à usiner (5), en particulier un dispositif d'usinage par rayon laser ou jet de fluide, comprenant un bâti (3), un support de pièce à usiner (4) qui est maintenu par le bâti (3), et un outil à rayonnement (2) qui est porté par le bâti (3) et peut être déplacé par rapport au support de pièce à usiner (4), **caractérisé en ce que**, dans un chemin de liaison à transmission de vibrations entre l'outil à rayonnement (2) et la surface d'appui définie par le support de pièce à usiner (4) pour la pièce à usiner (5), au moins un élément amortisseur (7), de préférence plusieurs éléments amortisseurs (7) montés en parallèle et de préférence disposés à distance les uns des autres, est/sont installé(s).

2. Dispositif d'usinage par rayonnement selon la revendication 1, **caractérisé en ce qu'**une direction d'amortissement (19) de l'amortissement provoqué par l'au moins un élément amortisseur (7) est sensiblement parallèle à la surface d'appui du support de pièce à usiner (4).

3. Dispositif d'usinage par rayonnement selon la revendication 1 ou 2, **caractérisé en ce que** le/les élément(s) amortisseur(s) (7) est/sont intégré(s) dans le support de pièce à usiner (4), dans lequel le support de pièce à usiner (4) comprend de préférence un cadre (14) et des éléments de grille (21) montés sur le cadre (14), dans lequel les éléments de grille (21) sont reliés au cadre (14) via le/les élément(s) amortisseur(s) (7).

4. Dispositif d'usinage par rayonnement selon la revendication 1 ou 2, **caractérisé en ce qu'**au moins un élément amortisseur, de préférence plusieurs éléments amortisseurs (7) et/sont installé(s) entre le bâti (3) et le support de pièce à usiner (4) en étant de préférence enserré(s) par le raccordement du support de pièce à usiner (4) au bâti (3).

5. Dispositif d'usinage par rayonnement selon la revendication 4, **caractérisé en ce que** le raccordement du support de pièce à usiner (4) au bâti (3) comprend au moins un dispositif de raccordement par conjugaison de forces (8) grâce auquel le support de pièce à usiner (4) peut être fixé au bâti (3) et **en ce qu'**à l'état fixé, le/les éléments(s) amortisseur(s) (7) est/sont disposé(s) de façon serrée dans une direction de serrage entre le support de pièce à usiner (4) et le bâti (3).

6. Dispositif d'usinage par rayonnement selon la revendication 4 ou 5, **caractérisé en ce que** le raccordement du support de pièce à usiner (4) au bâti comprend au moins un dispositif de serrage (8), de préférence amovible, grâce auquel le support de pièce à usiner (4) peut être serré depuis des côtés situés en vis-à-vis, dans lequel, à l'état de serrage, le/les élément(s) amortisseur(s) (7) est/sont respectivement serré(s) entre le support de pièce à usiner (4) et le dispositif de serrage (8).

7. Dispositif d'usinage par rayonnement selon la revendication 5 ou 6, **caractérisé en ce que** la direction de serrage (9) est sensiblement parallèle à la surface d'appui (15) du support de pièce à usiner (4).

8. Dispositif d'usinage par rayonnement selon l'une des revendications précédentes, **caractérisé en ce que** le raccordement du support de pièce à usiner (4) au bâti (3) est réalisé dans sa globalité d'une façon telle, que la fréquence de résonance du support de pièce à usiner (4) par rapport au bâti (3) est plus petite, dans au moins une direction parallèle à la surface d'appui (15), que dans la direction perpendiculaire à la surface d'appui (15), et/ou **en ce que** le/les élément(s) amortisseur(s) (7) est/sont réalisés d'une façon telle, que la fréquence de résonance du support de pièce à usiner (4) par rapport au bâti (3) présente, dans au moins une direction parallèle à la surface d'appui (15), une valeur d'un maximum de 10 Hz, de préférence d'un maximum de 8 Hz.

9. Dispositif d'usinage par rayonnement selon l'une des revendications précédentes, **caractérisé en ce que** l'outil à rayonnement (2) est relié au bâti (3) via des axes d'entraînement linéaires (X, Y), lesquels s'étendent sensiblement parallèlement à la surface d'appui (15) du support de pièce à usiner (4) et **en ce que** le/les élément(s) amortisseur(s) (7) présente(nt), à l'état installé, dans une direction qui est parallèle à l'axe d'entraînement (X) avec le plus grand moment d'inertie ou parallèle à la direction dans laquelle une déflexion ou stimulation maximale du bâti (3) a lieu en cas d'accélération maximale de l'outil à rayonnement (2) par rapport au bâti (3), une plus faible rigidité que dans une direction perpendiculaire à l'axe d'entraînement (X) avec le plus grand moment d'inertie ou perpendiculairement à la direction dans laquelle une déflexion ou stimulation maximale du bâti (3) a lieu en cas d'accélération maximale de l'outil à rayonnement (2) par rapport au bâti (3).

10. Dispositif d'usinage par rayonnement selon l'une des revendications précédentes, **caractérisé en ce que** l'outil à rayonnement (2) est disposé sur un pont (6) pouvant se déplacer le long d'une direction de déplacement (X) et **en ce qu'**à l'état installé, la rigidité de l'élément amortisseur/des éléments amortisseurs (7) est/sont plus petite(s) dans une direction qui est parallèle à la direction de déplacement (X) du pont (6) ou parallèle à la direction dans laquelle une déflexion ou stimulation maximale du bâti (3) a lieu en cas d'accélération maximale du pont (6) par rapport au bâti (3), que dans une direction qui est perpendiculaire à la direction de déplacement (X) du pont (6) ou perpendiculaire à la direction dans laquelle une déflexion ou stimulation maximale du bâti (3) a lieu en cas d'accélération maximale du pont (6) par rapport au bâti (3).

11. Dispositif d'usinage par rayonnement selon l'une des revendications précédentes, **caractérisé en ce que** le/les élément(s) amortisseur(s) (7) sont réalisés en forme de plaque et sont de préférence transversaux, de manière particulièrement préférée sensiblement perpendiculaires, à la surface d'appui (15) du support de pièce à usiner (4).

12. Dispositif d'usinage par rayonnement selon l'une des revendications précédentes, **caractérisé en ce que** le/les élément(s) amortisseur(s) (7) présentent, pour réduire leur rigidité, au moins une entaille (10) et/ou au moins un évidement (11), dans lequel l'au moins une entaille (10) et/ou l'au moins un évidement (11) s'étend de préférence transversalement, de préférence sensiblement perpendiculairement à la surface d'appui (15) du support de pièce à usiner (4).

13. Dispositif d'usinage par rayonnement selon l'une des revendications précédentes, **caractérisé en ce que** le/les élément(s) amortisseur(s) (7) présentent, en direction perpendiculaire à la surface d'appui (15) du support de pièce à usiner (4), une plus grande extension que dans la direction parallèle à la surface d'appui (15), et/ou **en ce qu'**au moins deux éléments amortisseurs (7) disposés de façon adjacente en direction parallèle à la surface d'appui (15) sont assemblés en une unité constructive.

14. Dispositif d'usinage par rayonnement selon l'une des revendications précédentes, **caractérisé en ce que** le/les élément(s) amortisseur(s) (7) est/sont formé(s) par un matériau élastomère, et/ou **en ce que**, à l'état non chargé(s), l'épaisseur d'/des élément(s) amortisseur(s) (7) est d'un maximum de 20 mm, de préférence d'un maximum de 15 mm.

15. Dispositif d'usinage par rayonnement selon l'une des revendications précédentes, **caractérisé en ce qu'**au moins un élément amortisseur (7) présente, sur au moins l'une de ses grandes surfaces, un recouvrement électroconducteur (12), de préférence sous la forme d'une plaque de couverture, depuis laquelle s'étend un tronçon électroconducteur (13) afin d'établir une liaison électrique entre le support de pièce à usiner (4) et un dispositif de mesure.

16. Dispositif d'usinage par rayonnement selon l'une des revendications précédentes, **caractérisé en ce que** l'élément amortisseur (7) repose, du côté de support de pièce à usiner, contre une plaque (17), de préférence une plaque métallique, fixée sur le cadre (14) du support de pièce à usiner (4), laquelle présente un bord dépassant sur son côté supérieur, lequel bord recouvre l'élément amortisseur (7).

17. Dispositif d'usinage par rayonnement selon l'une des revendications précédentes, **caractérisé en ce que** le/les élément(s) amortisseur(s) (7) comprennent un ressort ou un amortisseur hydraulique ou un élément piézoélectrique, ou bien **en ce que** l'élément amortisseur (7) est un élément amortisseur par friction, de préférence un élément en caoutchouc-métal.

18. Dispositif d'usinage par rayonnement selon l'une des revendications précédentes, **caractérisé en ce que** le/les élément(s) amortisseur(s) (7) sont réalisés de façon amovible sur le dispositif d'usinage par rayonnement (1), de préférence par détachement d'un dispositif de fixation.
